# EUROPEAN PATENT SPECIFICATION

(11) **EP 3 964 700 B1**
(45) Date of publication and mention of the grant of the patent: **10.07.2024**
(21) Application number: 21195382.3
(22) Date of filing: 07.09.2021
(51) Int. Cl.: F02C 3/10, F02C 9/00, F02K 5/00

(54) **SPLIT COMPRESSOR GAS TURBINE ENGINE**
GASTURBINENMOTOR MIT GETEILTEM VERDICHTER
MOTEUR À TURBINE À GAZ À COMPRESSEUR DIVISÉ

(30) Priority: 08.09.2020 US 202017014051
(43) Date of publication of application: 09.03.2022
(73) Proprietor: PRATT & WHITNEY CANADA CORP., Longueuil, Québec J4G 1A1 (CA)
(72) Inventor: VALOIS, Patrick, (01BE5) Longueuil, J4G 1A1 (CA); TURCOTTE, Hervé, (01BE5) Longueuil, J4G 1A1 (CA); PLANTE, Ghislain, (01BE5) Longueuil, J4G 1A1 (CA)
(74) Representative: Dehns

(56) References cited:
- EP-A1- 3 636 895
- EP-A2- 1 712 761
- US-A1- 2017 226 934

## Description

### TECHNICAL FIELD

The present disclosure relates generally to a turboshaft or turboprop gas turbine engine for an aircraft, and, more particularly, to such a gas turbine engine having a split compressor.

### BACKGROUND

To improve performance and efficiency, gas turbine engines such as turboprop engines or turboshaft engines may be provided with multiple spools, such as a low pressure spool which may include a low pressure compressor (LPC) and is driven by a low pressure turbine (LPT), and a high pressure spool including a high pressure compressor (HPC) driven by a high pressure turbine (HPT). The LPC may also include a "boost stage" which provides an initial compression of intake air before the air is directed further downstream within the engine. In such "boosted" engines, the LPC is typically driven by the LPT through a low pressure (LP) shaft, and the HPC is driven by the HPT through a high pressure (HP) shaft. The LP shaft is typically concentric with and internal to a hollow HP shaft.

In such traditional "boosted" engines, the operability of the LPC is dependent on the LPT due to their connection via the LP shaft. As such, the LPC cannot be driven independently at a desired regime. In addition, for example in a turboprop gas turbine engine, the ratio between the LPT speed and the propeller speed in certain conditions could cause operability challenges on the LPC.

EP 1,712,761 discloses an electrically coupled two-shaft gas turbine engine.

US 2017/226934 discloses hybridization of the compressors of a turbojet.

### SUMMARY

In one aspect, there is provided a gas turbine engine in accordance with claim 1.

The gas turbine engine as defined above and herein may further include one or more of the following additional features.

In certain aspects, the low pressure compressor (26,126) is directly driven by the electric motor (36,136).

In certain aspects, the low pressure compressor (2,126) is driven by the electric motor (36,136) through a gear system (38,138).

In certain aspects, the gear system (38,138) is within an accessory gearbox (40,140) of the gas turbine engine (10,110), the gear system (38,138) including a first shaft (38a, 138a) rotatably connected to the electric motor with a first gear (38b, 138b) mounted to a distal end thereof, and a second shaft (38d,138d) rotatably connected to the low pressure compressor (26,126) having a second gear (38c,38c) mounted to a distal end thereof, the first gear drivingly engaged with the second gear.

In certain aspects, the power source (42,142) includes a secondary power unit (142b) and/or a battery pack (142a).

In certain aspects, the power source (42,142) includes a generator (142c) driven by the gas turbine engine.

In certain aspects, the generator (142c) is driven via an accessory gearbox (40,140) by one of the high pressure shaft (34,134) or the output shaft (46,146).

In certain aspects, the gas turbine engine is a reverse flow gas turbine engine or a through flow gas turbine engine.

In certain aspects, the gas turbine engine further comprises a second clutch (152) operably connecting the electric motor (136) and the high pressure shaft (134), wherein the electric motor is operable to, while the second clutch (152) is engaged and the first clutch (150) is disengaged, at least one of start the gas turbine engine (110) via the high pressure shaft (134) or operate as a generator driven by the high pressure shaft.

In certain aspects, the gas turbine engine further comprises a low pressure assembly including the low pressure compressor and the low pressure turbine; and a high pressure spool including the high pressure compressor and the high pressure turbine, the high pressure turbine disposed downstream from a combustor and the high pressure compressor.

In certain aspects, the gas turbine engine is a turboprop or a turboshaft.

In another aspect, there is provided a method of operating a gas turbine engine in accordance with claim 12.

### BRIEF DESCRIPTION OF THE DRAWINGS

Reference is now made to the accompanying figures in which:
Fig. 1 is a schematic cross sectional view of a gas turbine engine, according to an example of the present disclosure not forming part of the claimed invention;
Fig. 2 is a schematic cross sectional view of the gas turbine engine of Fig. 1 with a clutch between the electric motor and the low pressure compressor;
Fig. 3 is a schematic cross sectional view of the gas turbine engine of Fig. 1 with a clutch between the electric motor and the low pressure compressor and a clutch between the electric motor and the high pressure shaft;
Fig. 4 is a schematic cross sectional view of the gas turbine engine of Fig. 1 with the electric motor directly driving the low pressure compressor, in an example not forming part of the claimed invention;
Fig. 5 is a schematic cross sectional view of a gas turbine engine, according to an additional example of the present disclosure not forming part of the claimed invention;
Fig. 6 is a schematic cross sectional view of the gas turbine engine of Fig. 5 with a clutch between the electric motor and the low pressure compressor;
Fig. 7 is a schematic cross sectional view of the gas turbine engine of Fig. 5 with a clutch between the electric motor and the low pressure compressor and a clutch between the electric motor and the high pressure shaft;
Fig. 8 is a schematic cross sectional view of the gas turbine engine of Fig. 5 with the electric motor directly driving the low pressure compressor, in an example not forming part of the claimed invention;
Fig. 9 is a schematic cross sectional view of the gas turbine engine of Fig. 5 with the external load positioned towards an aft portion of the engine, in an example not forming part of the claimed invention;
Figs. 10A-10C are block diagrams showing various power sources for the gas turbine engine of Fig. 1; and
Figs. 11A-11C are block diagrams showing various power sources for the gas turbine engine of Fig. 5.

### DETAILED DESCRIPTION

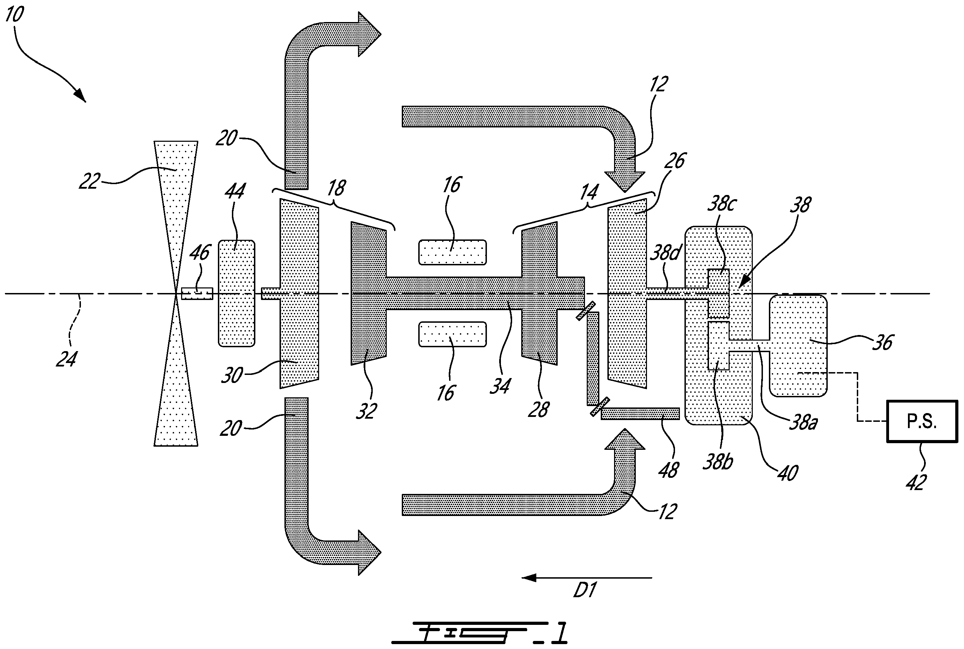

Fig. 1 illustrates a turboprop gas turbine engine 10 of a type preferably provided for use in subsonic flight, generally comprising in serial flow communication an air inlet 12, a compressor section 14 for pressurizing the air from the air inlet 12, a combustor 16 in which the compressed air is mixed with fuel and ignited for generating an annular stream of hot combustion gases, a turbine section 18 for extracting energy from the combustion gases, and an exhaust outlet 20 through which the combustion gases exit the gas turbine engine 10. The engine 10 may include an external load such as a propeller 22 which provides thrust for flight and taxiing. The gas turbine engine 10 includes a longitudinal center axis 24.

The gas turbine engine 10 (sometimes referred to herein simply as "engine 10") shown in Fig. 1 has a "reverse-flow" engine configuration because gases flow through it from the air inlet 12 at an aft portion thereof, to the exhaust outlet 20 at a forward portion thereof. The terms "forward" and "aft", used in this context, are understood to be with reference to the direction of travel of the aircraft. This is in contrast to a standard "through-flow" gas turbine engine configuration, in which gases flow through the engine from a forward portion to an aft portion. Such "through-flow" gas turbine engine configurations will be discussed in further detail below. In the "reverse-flow" engine 10 of Fig. 1, the direction of the flow of gases through the core of the engine 10 can be better appreciated by considering that the gases flow in the same direction D1 as the one along which the aircraft, and thus the engine 10 mounted thereto, travels during flight. Stated differently, gases flow through the engine 10 from an aft end thereof towards the propeller 16.

It will thus be appreciated that the expressions "forward" and "aft" used herein refer to the relative disposition of components of the engine 10, in correspondence to the "forward" and "aft" directions of the engine 10 and aircraft including the engine 10 as defined with respect to the direction of travel. In the embodiment shown, a component of the engine 10 that is "forward" of another component is arranged within the engine 10 such that it is located closer to the front of the engine 10, illustratively towards propeller 22. Similarly, a component of the engine 10 that is "aft" of another component is arranged within the engine 10 such that it is further away from the front of the engine 10, illustratively further away from propeller 22. The expressions "forward" and "aft" refer to the same relative directions in later discussed embodiments, regardless of the direction of travel of gasses through the engine 10 or the presence or absence of propeller 22.

It will also be appreciated that the expressions "upstream" and downstream" used herein refer to the relative disposition of components of the engine 10 with reference to the direction D1 of gas flow passing through the engine 10, regardless of their relative forward or aft positioning. For instance, in the "reverse-flow" engine 10 shown in Fig. 1, the compressor section 14 is positioned upstream of the combustor 16 and the turbine section 18. Alternatively, in a "through-flow" engine configuration, as will be discussed in further detail below, the upstream and downstream relative positioning of components will generally correspond to their relative forward and aft positioning.

Still referring to Fig. 1, the compressor section 14 and the turbine section 16 are operable to, respectively, compress and extract energy from the airflow in multiple stages. The compressor section 14 includes a low pressure compressor 26 (sometimes referred to as "LPC 26") and a high pressure compressor 28 (sometimes referred to as "HPC 28"), while the turbine section 18 includes a low pressure turbine 30 (sometimes referred to as "LPT 30") and a high pressure turbine 32 (sometimes referred to as "HPT 32"). The HPC 28 and HPT 32 are drivingly engaged via a high pressure shaft 34. In the shown case, the LPC 26, HPC 28, LPT 30, HPT 32 and the high pressure shaft 34 are each collinear with the longitudinal center axis 24. As such, the HPC 28 and HPT 32 may be referred to as a high pressure spool, as the HPT 32 rotatably drives the HPC 28 via the high pressure shaft 34 to compress the flowing airflow.

Conversely, in the architecture of the engine 10, the LPC 26 is decoupled from the LPT 30 and is thus not driven by the LPT 30. Rather, the LPC 26 is driven by an electric motor 36, as will be discussed in further detail below. Illustratively, when viewing the engine 10 of Fig. 1 in the direction D1 of airflow, the LPC 26 is upstream of the HPC 28, both of which are downstream of the air inlet 12 and upstream of the combustor 16. The HPT 32 is downstream of the combustor 16 and upstream of the LPT 30, which is upstream of the exhaust outlet 20. Other configurations may be considered as well. In the illustrated case, as there is no low pressure shaft joining the LPC 26 to the LPT 30 (as there would be in a typical multi-stage gas turbine engine), there is no need to ensure that concentric low and high pressure shafts do not interfere with one another. The LPC 26 and LPT 30 are thus said to be "de-coupled" from each other.

It can therefore be appreciated that the presence of the above-described LPC 26, HPC 28, LPT 30 and HPT 32 provides the engine 10 with a "split compressor" arrangement, wherein the LPC 26 and the HPC 28 are independently rotatable and thus capable of being driven at different speeds. More particularly, some of the work required to compress the incoming air is transferred from the HPC 28 to the LPC 26. This transfer of work may contribute to higher pressure ratios while maintaining a relatively small number of rotors. In a particular embodiment, higher pressure ratios allow for higher power density, better engine specific fuel consumption (SFC), and a lower turbine inlet temperature for a given power. These factors can contribute to a lower overall weight for the engine 10. The transfer of compression work from the HPC 28 to the LPC 26 contrasts with some conventional reverse-flow engines, in which the high pressure compressor (and thus the high pressure turbine) perform most of the compression work.

In light of the preceding, it can be appreciated that the LPT 30 may be considered "low pressure" turbine when compared to the HPT 32, which is sometimes referred to as forming part of the "gas generator". The de-coupled LPT 30 may also be referred to as a "power turbine". The turbine rotors of the HPT 32 may spin at a higher rotational speed than the turbine rotors of the LPT 30, for instance given the closer proximity of the HPT 32 to the outlet of the combustor 16. In addition, the LPC 26 and HPC 28 may be driven at different rotational speeds to maximize efficiency. For instance, the compressor rotors of the HPC 28 may rotate at a higher rotational speed than the compressor rotors of the LPC 26.

In the embodiment shown in Fig. 1, the electric motor 36 is drivingly engaged to the LPC 26 via a gear system 38, which in the present embodiment is a gear system forming part of an accessory gearbox 40. By connecting the electric motor 36 to the LPC 26 using the gear system 38, the operational speeds of the LPC 26 and the electric motor 36 are permitted to differ, i.e. they use one or more shafts and gears to harmonize their respective rotational speeds. In addition, the accessory gearbox 40 receives a rotational output and in turn drives accessories (e.g. fuel pump, starter-generator, oil pump, scavenge pump, etc.) that contribute to the functionality of the engine 10. In other cases, the electric motor 36 may drivingly engage the LPC 26 differently, including directly (i.e. without any intermediary gear system therebetween), as will be discussed in further detail below. The electric motor 36 receives power from a power source 42 (sometimes referred to as "P.S. 42"). As will be discussed in further detail below, various power sources may be considered for power source 42.

Illustratively, the gear system 38 includes a shaft 38a exiting the electric motor 36 with a first gear 38b mounted to a distal end thereof. The first gear 38b is drivingly engaged with a second gear 38c mounted to a distal end of a shaft 38d drivingly engaged to the LPC 26. In other cases, the gear system 38 may include different numbers of gears and/or shafts.

As the LPC 26 is decoupled from the LPT 30, it is capable of being selectively operated (i.e. driven) by electric motor 36 independently from the LPT 30, the HPC 28 and the HPT 32. In such a case, the boost pressure delivered to the HPC 28 by the LPC 26 may be independently modulated as needed. In addition, in conditions where little to no boost is needed from the LPC 26 (i.e. an LPC 26 pressure ratio of around 1.0), the power source for the electric motor 36 may be shut off and the LPC 26 may be left to freely rotate via the flowing airflow (i.e. "windmilling") to rotatably drive the electric motor 36 and act as a generator to provide additional electrical power for various engine 10 or aircraft needs. In the shown embodiment, although not necessarily the case in all embodiments, the LPT 30, decoupled from the LPC 26, is operable to rotatably drive the external load 22 via a reduction gearbox 44 and an output shaft 46. In the shown case, the output shaft 46 is collinear with the longitudinal axis 24. The LPT 30 may thus be referred to as a "free turbine" or a "power turbine", as discussed above, as it only powers the external load 22, for instance a propeller or a helicopter blade.

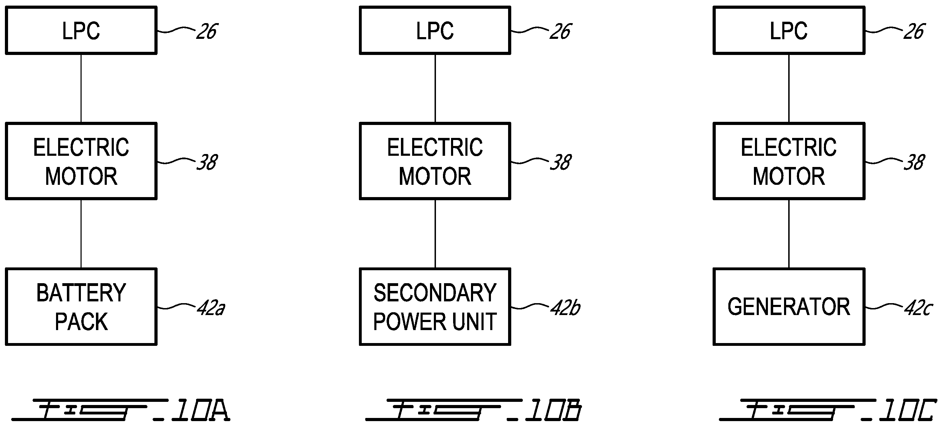

Referring additionally to Figs. 10A-10C, as discussed above, the power required to drive the electric motor 36 may originate from a variety of sources. In various cases, the power source 42 providing such power may be a battery pack 42a, a secondary power unit 42b, or in some cases the engine 10 itself. For instance, in such latter cases the electric motor 36 may be powered by a generator 42c driven by the high pressure shaft 34 via one or more additional shafts 48, illustratively two additional shafts, via the accessory gearbox 40. Alternatively, such a generator 42c may be driven by the output shaft 46. Other configurations for generating and storing power for the electric motor 36 may be considered as well. Of note, for simplicity, any elements connecting the electric motor 36 to the LPC 26 (for instance, gearbox 38 within accessory gearbox 40) are omitted from Figs. 10A-10C.

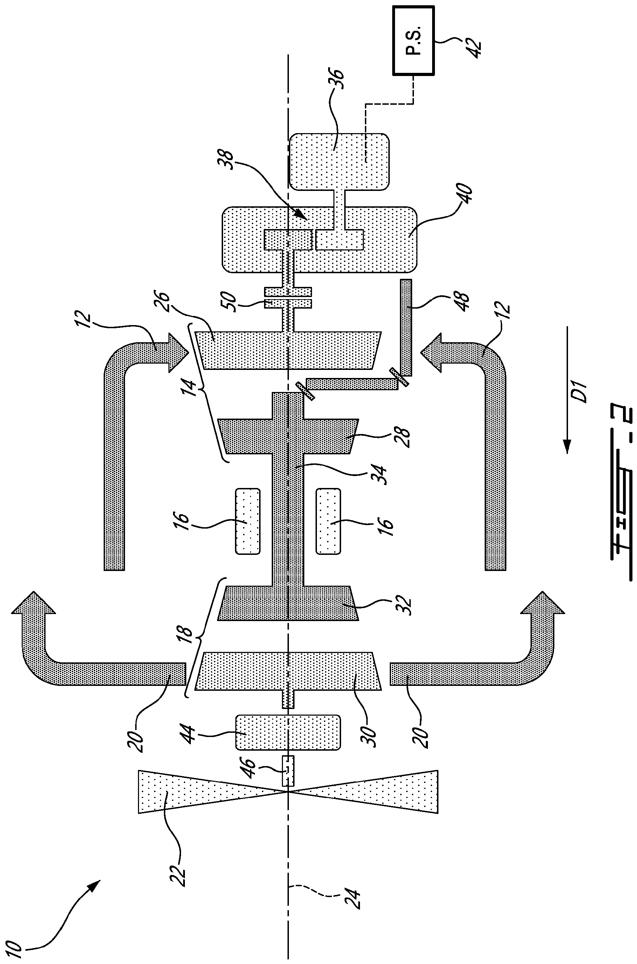

Referring now to Fig. 2, an alternate embodiment of the engine 10 of Fig. 1 is shown, with like reference numerals referring to like elements. In the shown case, a low pressure clutch 50 is installed between the electric motor 36 and the LPC 26. Other coupling/decoupling devices may be considered as well. As such, in operating conditions where little or no boost from the LPC 26 is required (and the LPC 26 is not being used to generate power for the electric motor 36, as discussed above), the low pressure clutch 50 may be disengaged to decouple the electric motor 36 from the LPC 26, thus reducing the drag of driving the LPC 26. The low pressure clutch 50 may then be re-engaged to re-couple the electric motor 36 to the LPC 26 as conditions dictate.

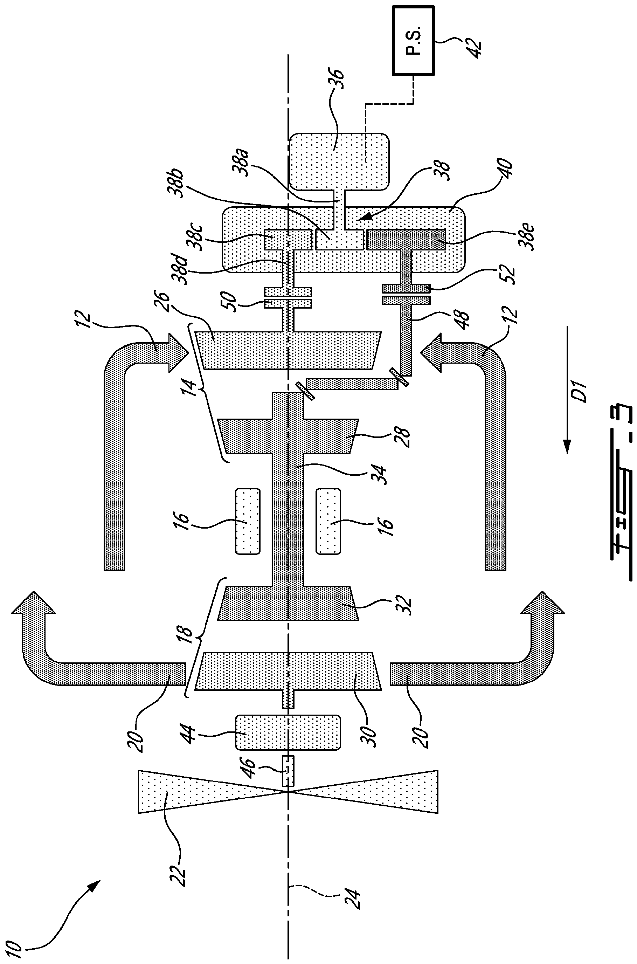

Referring now to Fig. 3, another alternate embodiment of the engine 10 of Figs. 1 and 2 is shown, with like reference numerals referring to like elements. In the shown case, a high pressure clutch 52 (other coupling/decoupling devices may be considered as well) connects the high pressure shaft 34, illustratively via the additional shafts 48, to the electric motor 36, additionally through a third gear 38e in the accessory gearbox 40. As such, both the low pressure clutch 50 and high pressure clutch 52 may be individually engaged and/or disengaged as conditions dictate. In certain cases, the low pressure clutch 50 may be disengaged (thus decoupling the electric motor 36 from the LPC 26) and the high pressure clutch 52 may be engaged (thus coupling the electric motor 36 to the high pressure shaft 34), thereby allowing the electric motor 36 to act as an engine starter for the engine 10. Similarly, in such an arrangement the electric motor 36 may act as a generator driven by the high pressure spool, thus generating electrical power for various engine or aircraft needs.

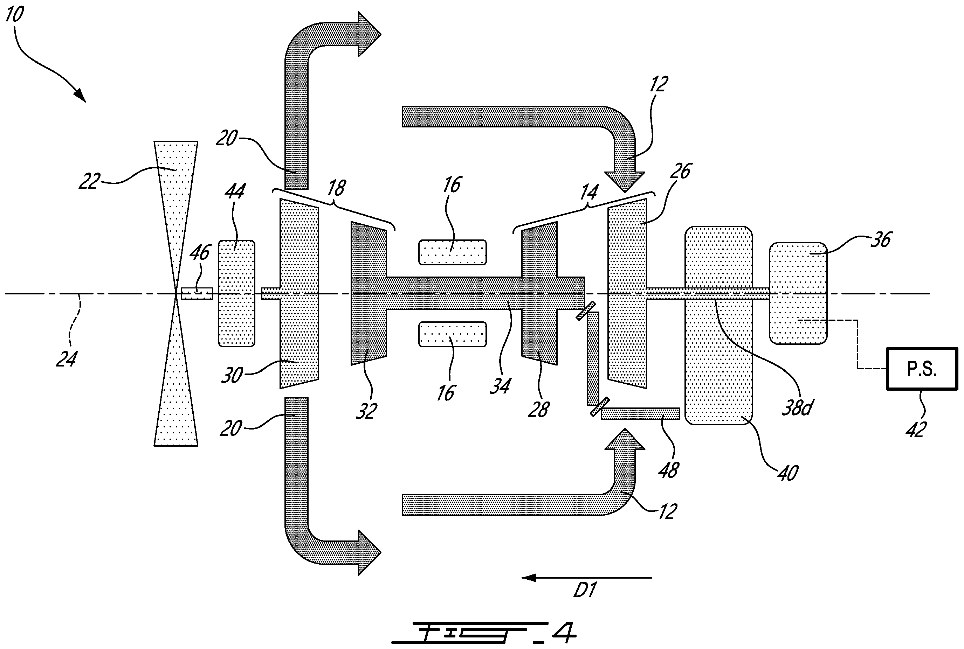

Referring now to Fig. 4, another alternate embodiment of the engine 10 of Figs. 1-3 is shown, with like reference numerals referring to like elements. In the shown case, the operating speeds of the LPC 26 and the electric motor 36 are compatible, i.e. the accessory gearbox 40 does not require a series of gears to rotatably connect the LPC 26 to the electric motor 36. Rather, the LPC 26 is directly driven by the electric motor 36, for instance via shaft 38d. In such cases, the rotational speed outputted by the electric motor 36 would match the rotational speed of the shaft 38d driving the LPC 26.

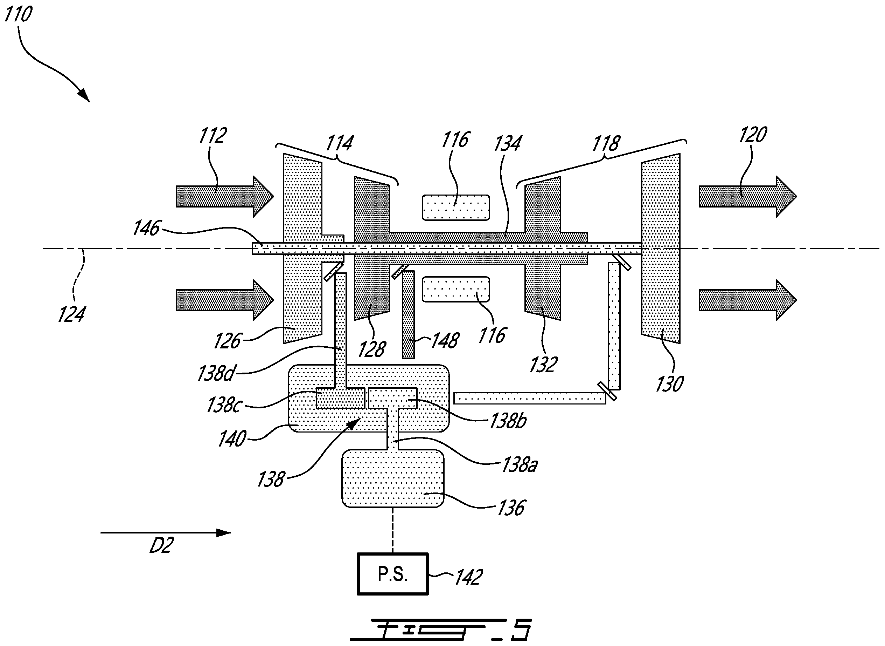

Referring now to Fig. 5, an additional embodiment for an engine 110 having a through-flow configuration is shown. Similarly to Fig. 1, Fig. 5 illustrates a turboshaft gas turbine engine 110 of a type preferably provided for use in subsonic flight, generally comprising in serial flow communication an air inlet 112, a compressor section 114 for pressurizing the air from the air inlet 112, a combustor 116 in which the compressed air is mixed with fuel and ignited for generating an annular stream of hot combustion gases, a turbine section 118 for extracting energy from the combustion gases, and an exhaust outlet 120 through which the combustion gases exit the gas turbine engine 110. The engine 110 may be operable to drive an external load (not shown). The gas turbine engine 110 has a longitudinal center axis 124.

The gas turbine engine 110 (sometimes referred to herein simply as "engine 110") shown in Fig. 5 is a "through-flow" engine because gases flow through it from the air inlet 112 at a forward portion thereof, to the exhaust outlet 120 at an aft portion thereof, i.e. along direction D2 in Fig. 5. This is in contrast to "reverse-flow" gas turbine engines shown in Figs 1-4.

The compressor section 114 and the turbine section 118 are operable to, respectively, compress and extract energy from the airflow in multiple stages. The compressor section 114 includes a low pressure compressor 126 (sometimes referred to as "LPC 126") and a high pressure compressor 128 (sometimes referred to as "HPC 128"), while the turbine section 118 includes a low pressure turbine 130 (sometimes referred to as "LPT 130") and a high pressure turbine 132 (sometimes referred to as "HPT 132"). The HPC 128 and HPT 132 are drivingly engaged via a high pressure shaft 134. In the shown case, the LPC 126, HPC 128, LPT 130, HPT 132 and the high pressure shaft 134 are each collinear with the longitudinal center axis 124. As such, the HPC 128 and HPT 132 may be referred to as a high pressure spool, as the HPT 132 rotatably drives the HPC 128 via the high pressure shaft 134 to compress the flowing airflow.

Conversely, in the architecture of the engine 10, the LPC 126 is decoupled from the LPT 130 and is thus not driven by the LPT 130. Rather, the LPC 126 is driven by an electric motor 136, as will be discussed in further detail below. Illustratively, when viewing the engine 110 of Fig. 5 in the direction D of airflow, the LPC 126 is upstream of the HPC 128, both of which are downstream of the air inlet 112 and upstream of the combustor 116. The HPT 132 is downstream of the combustor 116 and upstream of the LPT 130, which is upstream of the exhaust outlet 120. Other configurations may be considered as well. The LPC 126 and LPT 130 are thus said to be "de-coupled" from each other.

It can therefore be appreciated that the presence of the above-described LPC 126, HPC 128, LPT 130 and HPT 132 provides the engine 110 with a "split compressor" arrangement, wherein the LPC 126 and the HPC 128 are independently rotatable and thus capable of being driven at different speeds. More particularly, some of the work required to compress the incoming air is transferred from the HPC 128 to the LPC 126. This transfer of work may contribute to higher pressure ratios while maintaining a relatively small number of rotors. In a particular embodiment, higher pressure ratios allow for higher power density, better engine specific fuel consumption (SFC), and a lower turbine inlet temperature for a given power. These factors can contribute to a lower overall weight for the engine 110. The transfer of compression work from the HPC 128 to the LPC 126 contrasts with some conventional reverse-flow engines, in which the high pressure compressor (and thus the high pressure turbine) perform most of the compression work.

In light of the preceding, it can be appreciated that the LPT 130 may be considered the "low pressure" turbine when compared to the HPT 132, which is sometimes referred to as forming part of the "gas generator". The de-coupled LPT 130 may also be referred to as a "power turbine". The turbine rotors of the HPT 132 may spin at a higher rotational speed than the turbine rotors of the LPT 130, for instance given the closer proximity of the HPT 132 to the outlet of the combustor 116. In addition, the LPC 126 and the HPC 128 may be driven at different rotational speeds to maximize efficiency. For instance, the compressor rotors of the HPC 128 may rotate at a higher rotational speed than the compressor rotors of the LPC 126.

In the embodiment shown in Fig. 5, the electric motor 136 is drivingly engaged to the LPC 126 via a gear system 138, which in the present embodiment is a gear system forming part of an accessory gearbox 140. By connecting the electric motor 136 to the LPC 126 using the gear system 138, the operational speeds of the LPC 126 and the electric motor 136 are permitted to differ, i.e. they use one or more shafts and gears to harmonize their respective rotational speeds. In addition, the accessory gearbox 140 receives a rotational output and in turn drives accessories (e.g. fuel pump, starter-generator, oil pump, scavenge pump, etc.) that contribute to the functionality of the engine 110. In other cases, the electric motor 136 may drivingly engage the LPC 126 differently, including directly (i.e. without any intermediary gear system therebetween), as will be discussed in further detail below. The electric motor 136 receives power from a power source 142. As will be discussed in further detail below various power sources may be considered for power source 142.

Illustratively, the gear system 138 includes a shaft 138a exiting the electric motor 136 with a first gear 138b mounted to a distal end thereof. The first gear 138b is drivingly engaged with a second gear 138c mounted to a distal end of a shaft 138d drivingly engaged to the LPC 126. In other cases, the gear system 138 may include different numbers of gears and/or shafts.

As the LPC 126 is decoupled and from the LPT 130, it is capable of being selectively operated (i.e. driven) by electric motor 136 independently from the LPT 130, the HPC 128 and the HPT 132. In such a case, the boost pressure delivered to the HPC 128 by the LPC 126 may be independently modulated as needed.. In addition, in conditions where little to no boost is needed from the LPC 126 (i.e. an LPC 126 pressure ratio of around 1.0), the power source for the electric motor 136 may be shut off and the LPC 126 may be left to freely rotate via the flowing airflow (i.e. "windmilling") to rotatably drive the electric motor 136 and act as a generator to provide additional electrical power for various engine 110 or aircraft needs. In the shown embodiment, although not necessarily the case in all embodiments, the LPT 130, decoupled from the LPC 126, is operable to rotatably drive the external load (not shown) via an output shaft 146. In the shown case, the output shaft 146 is collinear with the longitudinal axis 124, the external load (not shown) is positioned towards the "forward" of the engine 110 (i.e. upstream of the compressor section 114) and thus the output shaft 146 passes through the high pressure shaft 134 and the LPC 126. The LPT 130 may thus be referred to as a "free turbine" or a "power turbine" as it only powers the external load.

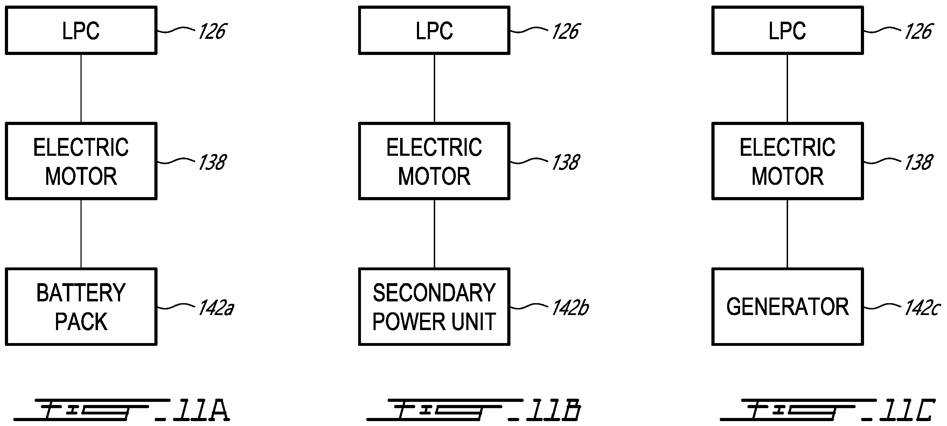

Referring additionally to Figs. 11A-11C, as discussed above, the power required to drive the electric motor 136 may originate from a variety of sources. In various cases, the power source 142 providing such power may come from a battery pack 142a, a secondary power unit 142b, or in some cases from the engine 110 itself. For instance, in such latter cases the electric motor 136 may be powered by a generator 142c driven by the high pressure shaft 134 via one or more additional shafts 148, illustratively one additional shaft, via the accessory gearbox 140. Alternatively, such a generator 142c may be driven by the output shaft 146. Other configurations for generating and storing power for the electric motor 136 may be considered as well. Of note, for simplicity, any elements connecting the electric motor 136 to the LPC 126 (for instance, gearbox 138 within accessory gearbox 140) are omitted from Figs. 11A-11C.

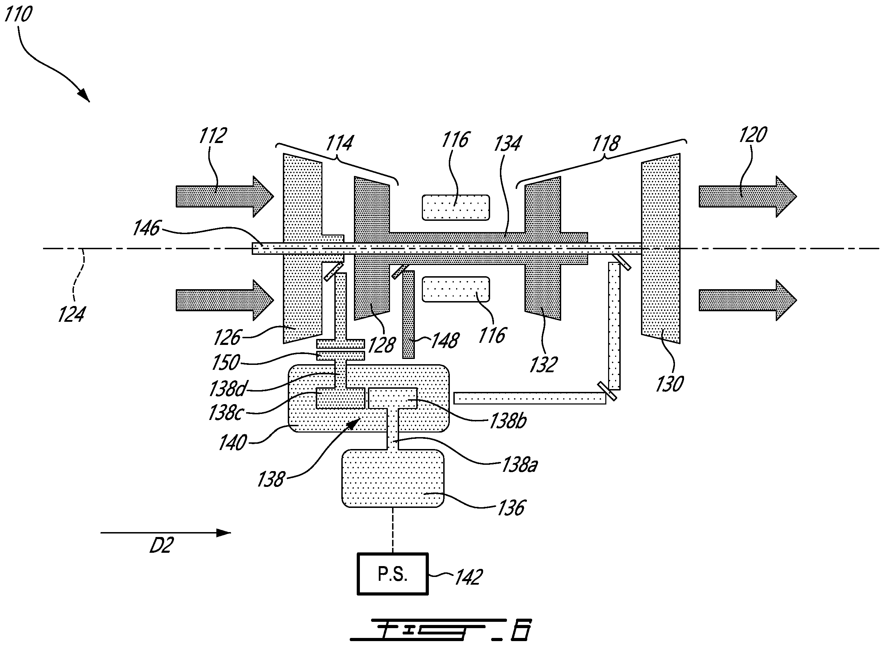

Referring now to Fig. 6, an alternate embodiment of the engine 110 of Fig. 5 is shown, with like reference numerals referring to like elements. In the shown case, a low pressure clutch 150 is installed between the electric motor 136 and the LPC 126. Other coupling/decoupling devices may be considered as well. As such, in operating conditions where little or no boost from the LPC 126 is required (and the LPC 126 is not being used to generate power for the electric motor 136, as discussed above), the low pressure clutch 150 may be disengaged to decouple the electric motor 136 from the LPC 126, thus reducing the drag of driving the LPC 126. The low pressure clutch 150 may then be re-engaged to re-couple the electric motor 136 to the LPC 126 as conditions dictate.

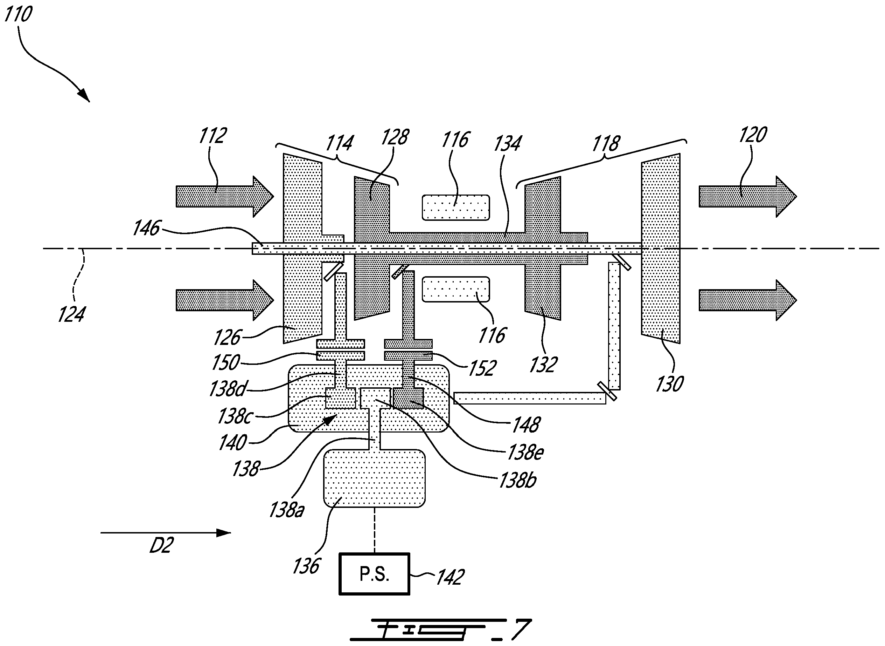

Referring now to Fig. 7, another alternate embodiment of the engine 110 of Figs. 5 and 6 is shown, with like reference numerals referring to like elements. In the shown case, a high pressure clutch 152 (other coupling/decoupling devices may be considered as well) connects the high pressure shaft 134, illustratively via the additional shaft 148, to the electric motor 136, additionally through a third gear 138e in the accessory gearbox 140. As such, both the low pressure clutch 150 and high pressure clutch 152 may be individually engaged and/or disengaged as conditions dictate. In certain cases, the low pressure clutch 150 may be disengaged (thus decoupling the electric motor 136 from the LPC 126) and the high pressure clutch 152 may be engaged (thus coupling the electric motor 136 to the high pressure shaft 134), thereby allowing the electric motor 136 to act as an engine starter for the engine 110. Similarly, in such an arrangement the electric motor 136 may act as a generator driven by the high pressure spool, thus generating electrical power for various engine or aircraft needs.

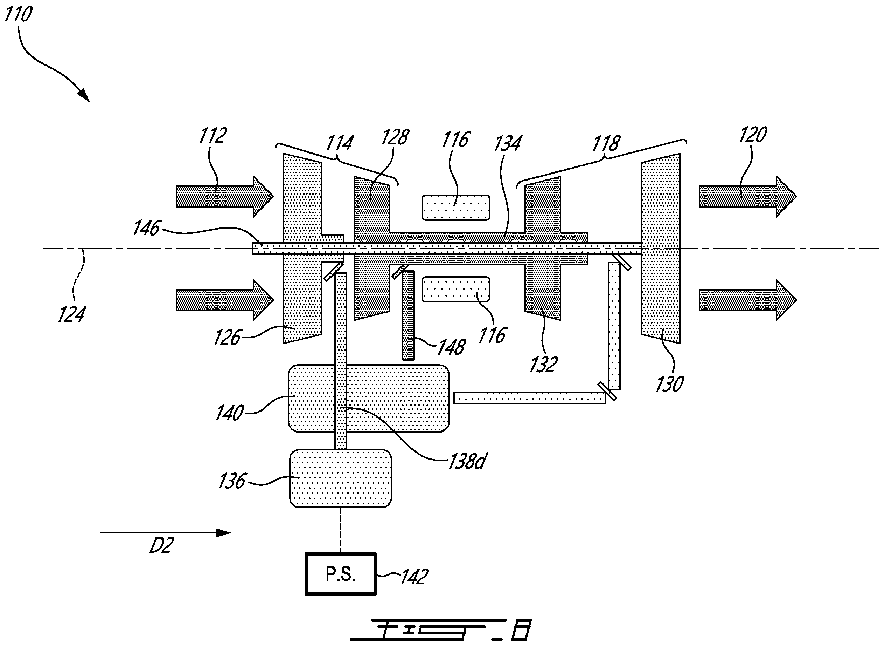

Referring now to Fig. 8, another alternate embodiment of the engine 110 of Figs. 5-7 is shown, with like reference numerals referring to like elements. In the shown case, the operating speeds of the LPC 126 and the electric motor 136 are compatible, i.e. the accessory gearbox 140 does not require a series of gears to rotatably connect the LPC 126 to the electric motor 136. Rather, the LPC 126 is directly driven by the electric motor 136, for instance via shaft 138d.

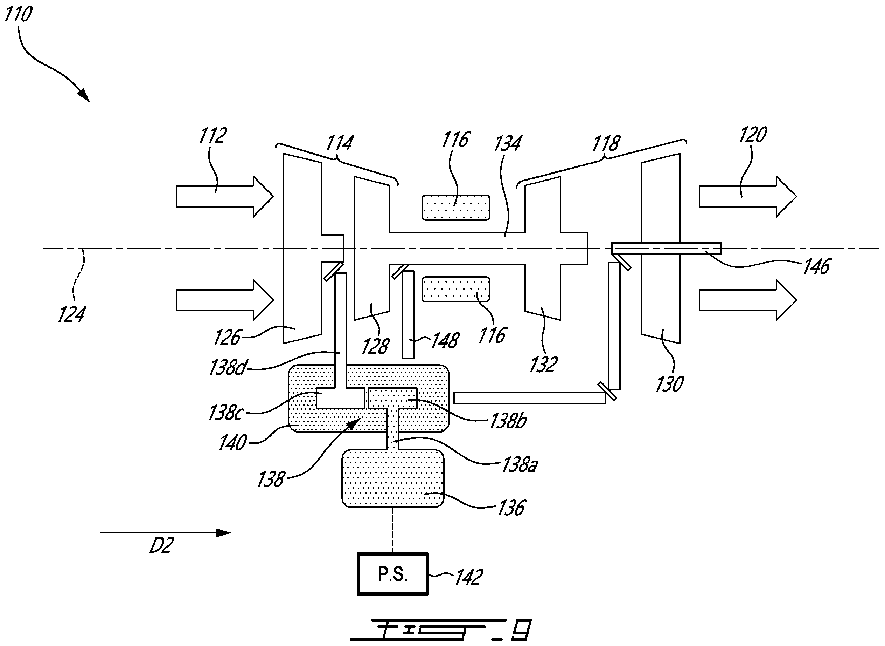

Referring now to Fig. 9, another alternate embodiment of the engine 110 of Figs. 5-8 is shown, with like reference numerals referring to like elements. In such an embodiment, the external load (not shown) may be positioned towards the aft portion of the engine 110. As such, the output shaft 146 would similarly be positioned towards the aft portion of the engine 110. In the illustrated case, as there is no low pressure shaft joining the LPC 126 to the LPT 130 (as there would be in a typical multi-stage gas turbine engine), there is no need to ensure that concentric low and high pressure shafts do not interfere with one another.

Although Figs. 1-4 show an engine 10 with a reverse-flow, turboprop configuration while Figs. 5-9 show an engine 110 with a through-flow, turboshaft configuration, other configurations may be considered as per the present technology. For instance, a through-flow, turboprop engine configuration may be considered. Alternatively, a reverse-flow, turboshaft engine configuration may be considered as well.

It can be appreciated that various means are contemplated for transferring rotational power from the electric motor 36, 136 to the LCP 26, 126 to drive the LPC 26, 126 independently from the LPT 30, 130, the HPC 28, 128 and the HPT 32, 132. As mentioned herein above, in some cases the electric motor 36, 136 may drive the LPC 26, 126 through a gear system 38, 138. The gear system 38, 138 may be within an accessory gearbox 40, 140 of the gas turbine engine 10, 110, the gear system 38, 138 including a first shaft 38a, 138a rotatably connected to the electric motor 36, 136 with a first gear 38b, 138b mounted to a distal end thereof, and a second shaft 38d, 138d rotatably connected to the LPC 26, 126 having a second gear 38c, 138c mounted to a distal end thereof, the first gear 38b, 138b drivingly engaged with the second gear 38c, 138c. In other cases, the electric motor 36, 136 may drive the LPC 26, 126 directly, i.e. without any intermediary gear system therebetween. Other means for transferring rotational power from the electric motor 36, 136 to the LPC 26, 126 may be contemplated as well.

The embodiments described in this document provide non-limiting examples of possible implementations of the present technology. Upon review of the present disclosure, a person of ordinary skill in the art will recognize that changes may be made to the embodiments described herein without departing from the scope of the present invention as defined in the appended claims.

## Claims

1. A gas turbine engine (10; 110) comprising:
a low pressure turbine (30; 130) drivingly engaged to an output shaft (46; 146) for driving a rotatable load (22);
a low pressure compressor (26; 126) de-coupled from the low pressure turbine (30; 130), the low pressure compressor (26; 126) and the low pressure turbine (30; 130) rotating independently from one another;
a high pressure compressor (28; 128) disposed downstream from the low pressure compressor (26; 126) and in fluid communication therewith to receive pressurized air therefrom;
a high pressure turbine (32; 132) disposed downstream from the high pressure compressor (28; 128) and drivingly engaged thereto via a high pressure shaft (34; 134), the high pressure turbine (32; 132) disposed upstream from the low pressure turbine (26; 126) and in fluid communication therewith; and
an electric motor (36; 136) receiving power from a power source (42; 142) and drivingly engaged to the low pressure compressor (26; 126), the electric motor operable to drive the low pressure compressor (26; 126) independently from the low pressure turbine (30; 130), the high pressure compressor (28; 128) and the high pressure turbine (32; 132),
**characterized in that**:
a first clutch (50; 150) operably connecting the electric motor (36; 136) to the low pressure compressor (26; 126), the first clutch (50; 150) selectively disengageable under low boost requirements to reduce drag on the gas turbine engine (10; 110) by decoupling the electric motor (36; 136) from the low pressure compressor (26; 126).

2. The gas turbine engine (10; 110) as defined in claim 1, wherein the low pressure compressor (26; 126) is directly driven by the electric motor (36; 136).

3. The gas turbine engine (10; 110) as defined in claim 1, wherein the low pressure compressor (26; 126) is driven by the electric motor (36; 136) through a gear system (38; 138).

4. The gas turbine engine (10; 110) as defined in claim 3, wherein the gear system (38; 138) is within an accessory gearbox (40; 140) of the gas turbine engine (10; 110), the gear system (38; 138) including a first shaft (38a; 138a) rotatably connected to the electric motor with a first gear (38b; 138b) mounted to a distal end thereof, and a second shaft (38d; 138d) rotatably connected to the low pressure compressor (26; 126) having a second gear (38c; 138c) mounted to a distal end thereof, the first gear (38b; 138b) drivingly engaged with the second gear (38c; 138c).

5. The gas turbine engine (10; 110) as defined in any preceding claim, wherein the power source (42; 142) includes a secondary power unit (42b; 142b) and/or a battery pack (42a; 142a).

6. The gas turbine engine (10; 110) as defined in any preceding claim, wherein the power source (42; 142) includes a generator (42c; 142c) driven by the gas turbine engine (10; 110).

7. The gas turbine engine (10; 110) as defined in claim 6, wherein the generator (42c; 142c) is driven via an accessory gearbox (40; 140) by one of the high pressure shaft (34; 134) or the output shaft (46; 146).

8. The gas turbine engine (10; 110) as defined in any preceding claim, wherein the gas turbine engine (10; 110) is a reverse flow gas turbine engine (10) or a through flow gas turbine engine (110).

9. The gas turbine engine (10; 110) as defined in any preceding claim, further comprising a second clutch (52; 152) operably connecting the electric motor (36; 136) and the high pressure shaft (34; 134), wherein the electric motor is operable to, while the second clutch (52; 152) is engaged and the first clutch (50; 150) is disengaged, at least one of start the gas turbine engine (10; 110) via the high pressure shaft (34; 134) or operate as a generator driven by the high pressure shaft (34; 134).

10. The gas turbine engine (10; 110) as defined in any preceding claim, further comprising:
a low pressure assembly including the low pressure compressor (26; 126) and the low pressure turbine (30; 130); and
a high pressure spool including the high pressure compressor (28; 128) and the high pressure turbine (32; 132), the high pressure turbine (32; 132) disposed downstream from a combustor (16; 116) and the high pressure compressor (28; 128).

11. The gas turbine engine (10; 110) as defined in any preceding claim, wherein the gas turbine engine (10; 110) is a turboprop or a turboshaft.

12. A method of operating a gas turbine engine (10; 110) according to any of claims 1 to 11, the method comprising:
drawing air into a core of the gas turbine engine (10; 110) through the low pressure compressor (26; 126) and then through the high pressure compressor (28; 128) to provide pressurized air;
igniting a mixture of the pressurized air and fuel to generate combustion gases;
directing the combustion gases through the high pressure turbine (32; 132) and then through the low pressure turbine (26; 126) to drive the high pressure turbine (32; 132) and the low pressure turbine (26; 126) with the combustion gases; driving the high pressure compressor (28; 128) with the high pressure turbine (32; 132) via the high pressure shaft (34; 134); and
selectively driving the low pressure compressor (26; 126) with the electric motor (36; 136) drivingly engaged to the low pressure compressor (26; 126), **characterized in that**: the a first clutch (50; 150) is operably connecting the electric motor (36; 136) to the low pressure compressor (26; 126), the first clutch (50; 150) selectively disengageable under low boost requirements to reduce drag on the gas turbine engine (10; 110) by decoupling the electric motor (36; 136) from the low pressure compressor (26; 126).

## Patentansprüche

1. Gasturbinentriebwerk (10: 110), umfassend:
eine Niederdruckturbine (30; 130), die mit einer Ausgangswelle (46; 146) in Antriebseingriff steht, um eine drehbare Last (22) anzutreiben;
einen Niederdruckkompressor (26; 126), der von der Niederdruckturbine (30; 130) abgekoppelt ist, wobei der Niederdruckkompressor (26; 126) und die Niederdruckturbine (30; 130) unabhängig voneinander drehen;
einen Hochdruckkompressor (28; 128), der stromabwärts des Niederdruckkompressors (26; 126) angeordnet ist und mit diesem in Fluidverbindung steht, um von ihm Druckluft zu empfangen;
eine Hochdruckturbine (32; 132), die stromabwärts von dem Hochdruckkompressor (28; 128) angeordnet ist und über eine Hochdruckwelle (34; 134) mit diesem in Antriebsseingriff steht, wobei die Hochdruckturbine (32; 132) stromaufwärts von der Niederdruckturbine (26; 126) angeordnet ist und mit dieser in Fluidverbindung steht; und
einen Elektromotor (36; 136), der Energie von einer Energiequelle (42; 142) erhält und in Antriebsseingriff mit dem Niederdruckkompressor (26; 126) steht, wobei der Elektromotor den Niederdruckkompressor (26; 126) unabhängig von der Niederdruckturbine (30; 130), dem Hochdruckkompressor (28; 128) und der Hochdruckturbine (32; 132) antreiben kann, **dadurch gekennzeichnet, dass**:
eine erste Kupplung (50; 150), die den Elektromotor (36; 136) mit dem Niederdruckkompressor (26; 126) operativ verbindet, wobei die erste Kupplung (50; 150) bei niedrigen Ladedruckanforderungen selektiv auskuppelbar ist, um den Luftwiderstand des Gasturbinentriebwerks (10; 110) zu verringern, indem der Elektromotor (36; 136) von dem Niederdruckkompressor (26; 126) abgekoppelt wird.

2. Gasturbinentriebwerk (10; 110) nach Anspruch 1, wobei der Niederdruckkompressor (26; 126) direkt von dem Elektromotor (36; 136) angetrieben wird.

3. Gasturbinentriebwerk (10; 110) nach Anspruch 1, wobei der Niederdruckkompressor (26; 126) von dem Elektromotor (36; 136) durch ein Getriebesystem (38; 138) angetrieben wird.

4. Gasturbinentriebwerk (10; 110) nach Anspruch 3, wobei sich das Getriebesystem (38; 138) innerhalb eines Zusatzgetriebes (40; 140) des Gasturbinentriebwerks (10; 110) befindet, wobei das Getriebesystem (38; 138) eine erste Welle (38a; 138a) beinhaltet, die drehbar mit dem Elektromotor verbunden ist und an deren distalem Ende ein erstes Zahnrad (38b; 138b) angebracht ist, und eine zweite Welle (38d; 138d) aufweist, die drehbar mit dem Niederdruckkompressor (26; 126) verbunden ist und an deren distalem Ende ein zweites Zahnrad (38c; 138c) angebracht ist, wobei das erste Zahnrad (38b; 138b) in Antriebseingriff mit dem zweiten Zahnrad (38c; 138c) steht.

5. Gasturbinentriebwerk (10; 110) nach einem der vorhergehenden Ansprüche, wobei die Energiequelle (42; 142) ein sekundäres Aggregat (42b; 142b) und/oder ein Batteriepaket (42a; 142a) beinhaltet.

6. Gasturbinentriebwerk (10; 110) nach einem der vorhergehenden Ansprüche, wobei die Energiequelle (42; 142) einen Generator (42c; 142c) beinhaltet, der von dem Gasturbinentriebwerk (10; 110) angetrieben wird.

7. Gasturbinentriebwerk (10; 110) nach Anspruch 6, wobei der Generator (42c; 142c) über ein Zusatzgetriebe (40; 140) von der Hochdruckwelle (34; 134) oder der Ausgangswelle (46; 146) angetrieben wird.

8. Gasturbinentriebwerk (10; 110) nach einem der vorhergehenden Ansprüche, wobei das Gasturbinentriebwerk (10; 110) ein Rückstrom-Gasturbinentriebwerk (10) oder ein Durchstrom-Gasturbinentriebwerk (110) ist.

9. Gasturbinentriebwerk (10; 110) nach einem der vorhergehenden Ansprüche, ferner umfassend eine zweite Kupplung (52; 152), die den Elektromotor (36; 136) und die Hochdruckwelle (34; 134) operativ verbindet, wobei der Elektromotor betrieben werden kann, um, während die zweite Kupplung (52; 152) eingerückt und die erste Kupplung (50; 150) ausgerückt ist, das Gasturbinentriebwerk (10; 110) über die Hochdruckwelle (34; 134) zu starten und/oder als ein von der Hochdruckwelle (34; 134) angetriebener Generator zu betreiben.

10. Gasturbinentriebwerk (10; 110) nach einem der vorhergehenden Ansprüche, ferner umfassend:
eine Niederdruckbaugruppe, die den Niederdruckkompressor (26; 126) und die Niederdruckturbine (30; 130) beinhaltet; und
eine Hochdruckspule, die den Hochdruckkompressor (28; 128) und die Hochdruckturbine (32; 132) beinhaltet, wobei die Hochdruckturbine (32; 132) stromabwärts von einem Verbrenner (16; 116) und dem Hochdruckkompressor (28; 128) angeordnet ist.

11. Gasturbinentriebwerk (10; 110) nach einem der vorhergehenden Ansprüche, wobei das Gasturbinentriebwerk (10; 110) ein Turboprop oder eine Turbowelle ist.

12. Verfahren zum Betreiben eines Gasturbinentriebwerks (10; 110) nach einem der Ansprüche 1 bis 11, wobei das Verfahren umfasst:
Ansaugen von Luft in einen Kern des Gasturbinentriebwerks (10; 110) durch den Niederdruckkompressor (26; 126) und dann durch den Hochdruckkompressor (28; 128), um Druckluft bereitzustellen;
Zünden eines Gemischs aus Druckluft und Brennstoff, um Verbrennungsgase zu erzeugen;
Leiten der Verbrennungsgase durch die Hochdruckturbine (32; 132) und dann durch die Niederdruckturbine (26; 126), um die Hochdruckturbine (32; 132) und die Niederdruckturbine (26; 126) mit den Verbrennungsgasen anzutreiben;
Antreiben des Hochdruckkompressors (28; 128) mit der Hochdruckturbine (32; 132) über die Hochdruckwelle (34; 134); und
selektives Antreiben des Niederdruckkompressors (26; 126) mit dem Elektromotor (36; 136), der in Antriebsseingriff mit dem Niederdruckkompressor (26; 126) steht,
**dadurch gekennzeichnet, dass**:
die erste Kupplung (50; 150) operativ den Elektromotor (36; 136) mit dem Niederdruckkompressor (26; 126) verbindet, wobei die erste Kupplung (50; 150) bei niedrigen Ladedruckanforderungen selektiv auskuppelbar ist, um den Luftwiderstand des Gasturbinentriebwerks (10; 110) zu verringern, indem der Elektromotor (36; 136) von dem Niederdruckkompressor (26; 126) abgekoppelt wird.

## Revendications

1. Moteur à turbine à gaz (10 ; 110) comprenant :
une turbine basse pression (30 ; 130) mise en prise par entraînement avec un arbre de sortie (46 ; 146) pour entraîner une charge rotative (22) ;
un compresseur basse pression (26 ; 126) découplé de la turbine basse pression (30 ; 130), le compresseur basse pression (26 ; 126) et la turbine basse pression (30 ; 130) tournant indépendamment l'un de l'autre ;
un compresseur haute pression (28 ; 128) disposé en aval du compresseur basse pression (26 ; 126) et en communication fluidique avec celui-ci pour recevoir de l'air sous pression depuis celui-ci ;
une turbine haute pression (32 ; 132) disposée en aval du compresseur haute pression (28 ; 128) et mise en prise par entraînement avec celui-ci par l'intermédiaire d'un arbre haute pression (34 ; 134), la turbine haute pression (32 ; 132) étant disposée en amont de la turbine basse pression (26 ; 126) et en communication fluidique avec celle-ci ; et
un moteur électrique (36 ; 136) recevant de l'énergie provenant d'une source d'alimentation (42 ; 142) et mis en prise par entraînement avec le compresseur basse pression (26 ; 126), le moteur électrique pouvant fonctionner pour entraîner le compresseur basse pression (26 ; 126) indépendamment de la turbine basse pression (30 ; 130), du compresseur haute pression (28 ; 128) et de la turbine haute pression (32 ; 132),
**caractérisé en ce que** :
un premier embrayage (50 ; 150) reliant de manière fonctionnelle le moteur électrique (36 ; 136) au compresseur basse pression (26 ; 126), le premier embrayage (50 ; 150) pouvant être débrayé de manière sélective sous de faibles exigences de suralimentation pour réduire la traînée sur la turbine à gaz moteur (10 ; 110) en découplant le moteur électrique (36 ; 136) du compresseur basse pression (26 ; 126) .

2. Moteur à turbine à gaz (10 ; 110) selon la revendication 1, dans lequel le compresseur basse pression (26 ; 126) est directement entraîné par le moteur électrique (36 ; 136).

3. Moteur à turbine à gaz (10 ; 110) selon la revendication 1, dans lequel le compresseur basse pression (26 ; 126) est entraîné par le moteur électrique (36 ; 136) par l'intermédiaire d'un système d'engrenages (38 ; 138).

4. Moteur à turbine à gaz (10 ; 110) selon la revendication 3, dans lequel le système d'engrenages (38 ; 138) se trouve à l'intérieur d'une boîte de vitesses d'accessoires (40 ; 140) du moteur à turbine à gaz (10 ; 110), le système d'engrenages (38 ; 138) comportant un premier arbre (38a ; 138a) relié en rotation au moteur électrique avec un premier engrenage (38b ; 138b) monté sur une extrémité distale de celui-ci, et un second arbre (38d ; 138d) relié en rotation au compresseur basse pression (26 ; 126) présentant un second engrenage (38c ; 138c) monté à une extrémité distale de celui-ci, le premier engrenage (38b ; 138b) étant mis en prise par entraînement avec le second engrenage (38c ; 138c).

5. Moteur à turbine à gaz (10 ; 110) selon une quelconque revendication précédente, dans lequel la source d'alimentation (42 ; 142) comporte une unité d'alimentation secondaire (42b ; 142b) et/ou un bloc de batteries (42a ; 142a).

6. Moteur à turbine à gaz (10 ; 110) selon une quelconque revendication précédente, dans lequel la source d'alimentation (42 ; 142) comporte un générateur (42c ; 142c) entraîné par le moteur à turbine à gaz (10 ; 110).

7. Moteur à turbine à gaz (10 ; 110) selon la revendication 6, dans lequel le générateur (42c ; 142c) est entraîné par l'intermédiaire d'une boîte de vitesses d'accessoires (40 ; 140) par l'un de l'arbre haute pression (34 ; 134) ou de l'arbre de sortie (46 ; 146).

8. Moteur à turbine à gaz (10 ; 110) selon une quelconque revendication précédente, dans lequel le moteur à turbine à gaz (10 ; 110) est un moteur à turbine à gaz à flux inversé (10) ou un moteur à turbine à gaz à flux traversant (110).

9. Moteur à turbine à gaz (10 ; 110) selon une quelconque revendication précédente, comprenant en outre un second embrayage (52 ; 152) reliant de manière fonctionnelle le moteur électrique (36 ; 136) et l'arbre haute pression (34 ; 134), dans lequel le moteur électrique peut fonctionner, pendant que le second embrayage (52 ; 152) est embrayé et que le premier embrayage (50 ; 150) est débrayé, pour réaliser au moins l'une des actions suivantes : démarrer le moteur à turbine à gaz (10 ; 110) par l'intermédiaire de l'arbre haute pression (34 ; 134) ou fonctionner comme un générateur entraîné par l'arbre haute pression (34 ; 134).

10. Moteur de turbine à gaz (10 ; 110) selon une quelconque revendication précédente, comprenant en outre :
un ensemble basse pression comportant le compresseur basse pression (26 ; 126) et la turbine basse pression (30 ; 130) ; et
un tiroir haute pression comportant le compresseur haute pression (28 ; 128) et la turbine haute pression (32 ; 132), la turbine haute pression (32 ; 132) étant disposée en aval d'une chambre de combustion (16 ; 116) et du compresseur haute pression (28 ; 128).

11. Moteur à turbine à gaz (10 ; 110) selon une quelconque revendication précédente, dans lequel le moteur à turbine à gaz (10 ; 110) est un turbopropulseur ou un turbomoteur.

12. Procédé de fonctionnement d'un moteur à turbine à gaz (10 ; 110) selon l'une quelconque des revendications 1 à 11, comprenant :
l'aspiration de l'air dans un noyau du moteur à turbine à gaz (10 ; 110) à travers le compresseur basse pression (26 ; 126) puis à travers le compresseur haute pression (28 ; 128) pour fournir de l'air sous pression ;
l'allumage d'un mélange d'air sous pression et de carburant pour générer des gaz de combustion ;
la direction des gaz de combustion à travers la turbine haute pression (32 ; 132) puis à travers la turbine basse pression (26 ; 126) pour entraîner la turbine haute pression (32 ; 132) et la turbine basse pression (26 ; 126) avec les gaz de combustion ;
l'entraînement du compresseur haute pression (28 ; 128) avec la turbine haute pression (32 ; 132) par l'intermédiaire de l'arbre haute pression (34 ; 134) ; et
l'entraînement de manière sélective du compresseur basse pression (26 ; 126) avec le moteur électrique (36 ; 136) mis en prise par entraînement avec le compresseur basse pression (26 ; 126),
**caractérisé en ce que** :
le premier embrayage (50 ; 150) relie de manière fonctionnelle le moteur électrique (36 ; 136) au compresseur basse pression (26 ; 126), le premier embrayage (50 ; 150) pouvant être débrayé de manière sélective sous de faibles exigences de suralimentation pour réduire la traînée sur la turbine à gaz moteur (10 ; 110) en découplant le moteur électrique (36 ; 136) du compresseur basse pression (26 ; 126).
